# FASCICULE DE BREVET EUROPEEN

(11) **EP 1 778 063 B1**
(45) Date de publication et mention de la délivrance du brevet: **08.10.2008**
(21) Numéro de dépôt: 05788639.2
(22) Date de dépôt: 08.07.2005
(51) Int. Cl.: A47J 31/40

(54) **GROUPE DE PRÉPARATION D'AU MOINS UNE TASSE DE CAFÉ DE TYPE EXPRESSO OU AUTRE BOISSON CHAUDE À PARTIR D'UNE DOSE INDIVIDUELLE PRÉEMBALLÉE APPELÉE DOSETTE.**
EINHEIT ZUM ZUBEREITEN MINDESTENS EINER ESPRESSOTASSE ODER EINES ANDEREN HEISSGETRÄNKS AUS EINEM EINZELNEN, VORVERPACKTEN KAFFEEPAD
UNIT FOR PREPARING AT LEAST ONE ESPRESSO COFFEE CUP OR OTHER HOT BEVERAGE FROM A PREPACKAGED SINGLE SO-CALLED COFFEE POD

(30) Priorité: 16.07.2004 FR 0407906
(43) Date de publication de la demande: 02.05.2007
(73) Titulaire: Reneka International, 67560 Rosheim (FR)
(72) Inventeur: PAGET, Arnaud, F-67210 OBERNAI (FR); BARGOT, Jean-Michel, F-25000 Besancon (FR); SOUIN, Dominique, F-67120 DORLISHEIM (FR)
(74) Mandataire: Metz, Paul
(86) Numéro de dépôt international: PCT/FR2005/001781
(87) Numéro de publication internationale: WO 2006/016054

(56) Documents cités:
- EP-A- 0 384 443
- EP-A- 1 050 258
- EP-A- 1 219 216
- US-A- 3 213 777
- US-B1- 6 510 783

## Description

La présente invention concerne un groupe automatique de préparation d'au moins une tasse de café de type expresso pour une machine à café professionnelle à partir d'au moins une dose individuelle préemballée appelée dosette.

Plus généralement, la présente invention concerne un dispositif de préparation d'une boisson chaude à partir d'eau chaude sous pression et d'au moins une dosette renfermant la quantité de produit à extraire par la quantité d'eau chaude pour une dose de boisson.

Habituellement, de telles machines à café utilisent un ou plusieurs groupes de préparation sur chacun desquels l'utilisateur vient fixer de manière amovible un porte-filtre comportant une passoire, préalablement remplie d'une dosette de café. Après la commande de l'utilisateur par appui sur la touche de café désiré, une pompe interne à la machine se met en marche et de l'eau est mise sous pression avant de traverser un débitmètre qui fait circuler une quantité d'eau déterminée en fonction du café demandé vers un organe de chauffe. Cette quantité dosée d'eau chauffée arrive à une, puis sort d'une douchette et passe à travers le café qui se trouve dans la passoire du porte-filtre. Il suffit alors de recueillir le café chaud qui s'écoule du bec du porte-filtre dans une tasse placée en dessous de celui-ci.

En général, les machines professionnelles de bar ou de restauration comportent des porte-filtres à deux becs permettant de remplir chacun deux tasses simultanément. Le nombre de groupes de préparation varie selon la taille de la machine.

La méthode traditionnelle pour réaliser un expresso en utilisant ces machines consistait avant l'apparition des dosettes à utiliser du café moulu que l'on tassait dans le porte-filtre à l'aide d'un tasseur plat. Cependant, ce procédé nécessite une manipulation laborieuse relativement longue et salissante.

Pour cette raison, l'utilisation pour chaque tasse d'une dosette préemballée de café moulu s'est peu à peu développée et généralisée. Cette utilisation s'avère bien plus pratique, plus rapide, plus propre et plus hygiénique, et permet en outre un dosage précis et constant de la quantité et de la mouture du café ainsi qu'une préservation de ses arômes lorsque les dosettes sont conditionnées dans un emballage individuel hermétique. Elle permet en outre de proposer une importante variété de cafés, de mélanges ou d'assemblages qui évite le recours actuel à divers paquets de cafés correspondant à l'offre en cafés de l'établissement. De toute façon, ce problème existait déjà entre le café normal et le décaféiné.

Dans ce cadre, les torréfacteurs et les fabricants de machines à café ont mis au point un type de dosette standard contenant sept grammes de café et ayant la forme de deux soucoupes accolées par leur bord périphérique. Ces dosettes sont désignées sous le nom de "dosettes ESE" (Easy Serving Expresso) et sont utilisables dans la plupart des machines à café à dosette, même si d'autres torréfacteurs ont préféré créer leur propre format de dosette.

Ces dosettes peuvent être soit introduites manuellement directement dans la machine et posées à l'emplacement prévu, ce qui peut être malaisé lorsque cet emplacement est difficile d'accès et/ou même dangereux lorsque l'utilisateur doit faire pénétrer sa main dans la machine, soit être introduites à travers une fente. Dans ce dernier cas on peut par exemple les introduire verticalement dans une glissière le long de laquelle chacune glisse jusqu'à un emplacement prévu, ou utiliser un tiroir horizontal présentant des emplacements pour dosettes.

L'utilisation d'un tel tiroir présente de nombreux avantages, notamment dans le fait qu'il est extrêmement aisé et rapide d'y placer les dosettes et que cette manipulation se faisant à l'extérieur de la machine ne présente aucun danger pour les mains de l'utilisateur. Pour cette raison, l'invention concerne un groupe de préparation présentant un chargement de ce type.

Ainsi, divers dispositifs de manipulation et de chargement automatique de dosettes de boisson préemballées à tiroir prévus pour un dispositif de préparation de boisson par infusion ont été proposés.

Par la demande WO n° 00/49926 au nom de SIMAC VETRELLA, on connaît par exemple un dispositif de chargement et de préparation automatique du type à tiroir en translation pour une ou plusieurs dosettes qui sont éjectées en deux temps juste avant la réalisation du café suivant.

La demande EP n° 1050258 au nom de EUROMATIK décrit un dispositif de chargement et de préparation automatique du type à tiroir en translation pour une seule dosette qui est éjectée en deux temps juste avant la réalisation du café suivant.

Une autre solution est divulguée dans la demande WO n° 02/38016 au nom de SMILE COFFEE qui décrit un dispositif de chargement et de préparation automatique, utilisant plusieurs actionneurs, du type à tiroir pivotant utilisé pour une dosette seulement.

La demande EP n° 1153561 au nom de NESTLE décrit un dispositif de chargement et de préparation automatique du type à tiroir en translation pour une seule dosette de type non ESE qui est éjectée juste avant la réalisation du café suivant.

Enfin, la demande EP n° 1219216 au nom de NESTLE décrit un dispositif de chargement et de préparation automatique du type à tiroir en translation pour deux dosettes de type non ESE uniquement qui sont éjectées juste avant la réalisation du café suivant.

Cependant, ces dispositifs de chargement de dosettes et de préparation automatique de café ne permettent pas toujours la mise en place et l'utilisation simultanée de deux dosettes, et même dans ce cas, il n'est pas toujours possible d'en utiliser une seule à la fois pour la préparation d'un seul café. De plus, dans les dispositifs précités, aucun ne permet de détecter la présence ou non d'une dosette, ce qui implique que lorsqu'un seul des emplacements pour dosette est utilisé, c'est à l'utilisateur d'en informer la machine. Il serait bien plus avantageux que le dispositif de chargement et de préparation automatique en dosettes soit prévu pour deux dosettes simultanées et qu'il comporte un moyen de détection individuel de présence de chaque dosette.

En outre, ces dispositifs n'évacuent pas toujours la dosette en fin de cycle, la dosette étant souvent éjectée juste avant la préparation du café suivant. Ainsi, la dosette humide restant dans son emplacement ou sur un support intermédiaire souvent inaccessible constitue un inconvénient important lors d'arrêts prolongés de la machine. Elle peut en effet rapidement se détériorer et s'infecter par l'apparition de germes et/ou de moisissures qui prolifèrent dans les réceptacles et le circuit, et peuvent dégrader la qualité du café, voire même être dangereux pour la santé du consommateur. Il est donc important que la dosette soit éjectée automatiquement lorsqu'épuisée et ceci immédiatement après son utilisation.

En outre, certains parmi ces dispositifs n'utilisent pas de dosettes au format ESE mais des dosettes d'un format spécifique et qui sont souvent bien plus onéreuses. Il serait donc très avantageux que le dispositif puisse utiliser des dosettes au format ESE, voir même d'autres types de dosettes préemballées ou tous les types existants.

Par conséquent, le but de l'invention est de fournir un groupe complet de préparation automatique de café de type expresso ou autres boissons à partir de dosettes préemballées à tiroir prévu pour un dispositif de boisson qui permette le chargement d'au moins une et au plus de deux dosettes et comporte un moyen de détection individuelle de la présence de chaque dosette dans son emplacement. Avantageusement, ce dispositif doit pouvoir utiliser de nombreux types de dosettes préemballées, notamment les dosettes au format ESE, et celles-ci doivent être éjectées automatiquement en fin de cycle.

Préférentiellement, ce dispositif devra être d'une conception conduisant à une réalisation de bonne fiabilité et peu onéreuse, et d'une utilisation simple, rapide et sans danger pour l'utilisateur et le consommateur.

Pour résoudre ce problème technique le groupe de chargement et de préparation automatique de boisson à partir de dosettes préemballées selon l'invention, se compose d'un support mécanique fixe destiné à être monté dans une machine à café ou de préparation de boissons, notamment chaudes, cette machine comprenant les éléments supplémentaires nécessaires au fonctionnement de l'ensemble, à savoir notamment une chaudière sous pression, une ou plusieurs sortie(s) d'eau chaude, une ou plusieurs sortie(s) de vapeur et un panneau de commande permettant de commander l'ensemble.

Le groupe de préparation comprend dans sa partie basse un tiroir mobile en translation horizontale qui comporte un plateau récepteur basculant équipé de deux passoires logées sur un porte-filtre monté sur sa face supérieure formant avec son support une trappe basculant autour d'un axe horizontal situé dans la partie avant du plateau récepteur et est maintenue fermée à l'aide d'un mécanisme de verrouillage. Ce plateau récepteur communique dans sa partie basse avec divers éléments permettant de conduire vers le bas la boisson préparée vers un récipient approprié, par exemple un gobelet ou une tasse.

Dans sa partie haute, le groupe comporte un bloc d'injection mobile en translation verticale comprenant sur sa face inférieure deux douchettes mobiles à la manière d'un piston en translation verticale dans une chemise de protection et d'étanchéité fixée sur la face inférieure du bloc d'injection. Ces douchettes sont prévues pour être raccordées au circuit hydraulique de la machine.

Le bloc d'injection mobile est déplacé en translation verticale par un mécanisme à moteur unique entraînant à travers une transmission mécanique divers éléments mobiles de l'ensemble dont le bloc d'injection par l'intermédiaire d'un arbre à cames tournant toujours dans le même sens pour tout le cycle et sans nécessiter de système de rattrapage de course lié à l'usure. Préférentiellement, cet arbre à cames permet également de commander le déverrouillage du mécanisme de verrouillage du plateau récepteur basculant afin d'éjecter automatiquement les dosettes en fin de cycle.

En outre, le bloc d'injection mobile comporte un moyen de détection automatique et individuelle de la présence d'une dosette dans l'une, l'autre ou les deux passoires du plateau inférieur. Ce moyen de détection actionnera en conséquence le système hydraulique de la machine pour l'un, l'autre ou les deux emplacements individuels de dosette.

Ainsi, le groupe de préparation selon l'invention présente de nombreux avantages, parmi lesquels on pourra considérer les suivants :
- le principe du tiroir ;
- l'éjection automatique en fin de cycle de préparation du café ;
- la détection automatique et individuelle de la présence de chaque dosette ;
- le traitement simultané mais individualisé de deux dosettes à la fois ;
- un moteur unique pour tout le cycle de préparation et tournant toujours dans le même sens ;
- l'absence de système de rattrapage de course lié à l'usure ;
- la décompression de la chambre avant ouverture du plateau récepteur basculant ;
- la synchronisation de la commande des crochets de verrouillage du plateau récepteur basculant ;
- l'existence d'un choc pour décoller les dosettes épuisées ; et
- la fermeture automatique du plateau récepteur basculant lors de l'ouverture du tiroir.

D'autres caractéristiques et avantages de l'invention apparaîtront à la lecture de la description détaillée qui va suivre, description faite en référence aux dessins annexés, dans lesquels :
- la figure 1 est une vue d'ensemble en perspective de dessus d'une machine à café classique équipée de deux groupes de chargement et de préparation automatique de dosettes selon l'invention en position ouverte ;
- la figure 2 est une vue d'ensemble latérale de la machine à café classique de la figure 1 dans laquelle est positionnée une tasse et dans laquelle les deux groupes selon l'invention sont en position d'extraction ;
- la figure 3 est une vue d'ensemble en perspective d'un groupe de chargement et de préparation automatique de dosettes selon l'invention avec le tiroir en position ouverte ;
- la figure 4 est une vue d'ensemble en perspective d'un groupe de chargement et de préparation automatique de dosettes selon l'invention avec le tiroir en position fermée ;
- la figure 5 est une vue éclatée en perspective d'un groupe de chargement et de préparation automatique de dosettes selon l'invention ;
- la figure 6 est une vue d'ensemble en perspective de dessus du tiroir du groupe de chargement et de préparation automatique de dosettes selon l'invention dans lequel le plateau récepteur basculant se trouve en position fermée ;
- la figure 7 est une vue d'ensemble en perspective de dessous du tiroir du groupe de chargement et de préparation automatique de dosettes selon l'invention dans lequel le plateau récepteur basculant se trouve en position ouverte ;
- la figure 8 est une vue d'ensemble en éclaté du tiroir du groupe de chargement et de préparation automatique de dosettes selon l'invention ;
- la figure 9 est une vue d'ensemble en perspective de dessus du plateau récepteur basculant du tiroir selon l'invention ;
- la figure 10 est une vue d'ensemble en perspective de dessous du plateau récepteur basculant du tiroir selon l'invention ;
- la figure 11 est une vue éclatée en perspective du plateau récepteur basculant du tiroir selon l'invention ;
- la figure 12 est une vue d'ensemble en perspective de dessus du bloc d'injection selon l'invention ;
- la figure 13 est une vue d'ensemble en perspective de dessous du bloc d'injection selon l'invention ;
- la figure 14 est une vue d'ensemble en éclaté du bloc d'injection selon l'invention ;
- les figures 15 à 25 sont des vues simplifiées en coupe transversale verticale d'un groupe selon l'invention montrant les principales étapes au cours d'un cycle de fonctionnement.

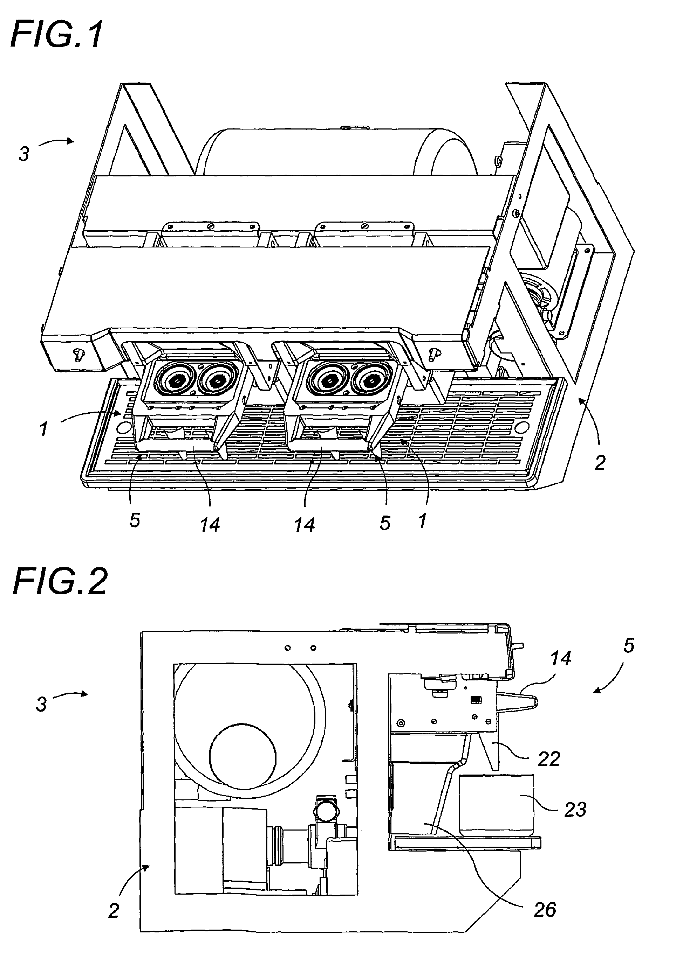

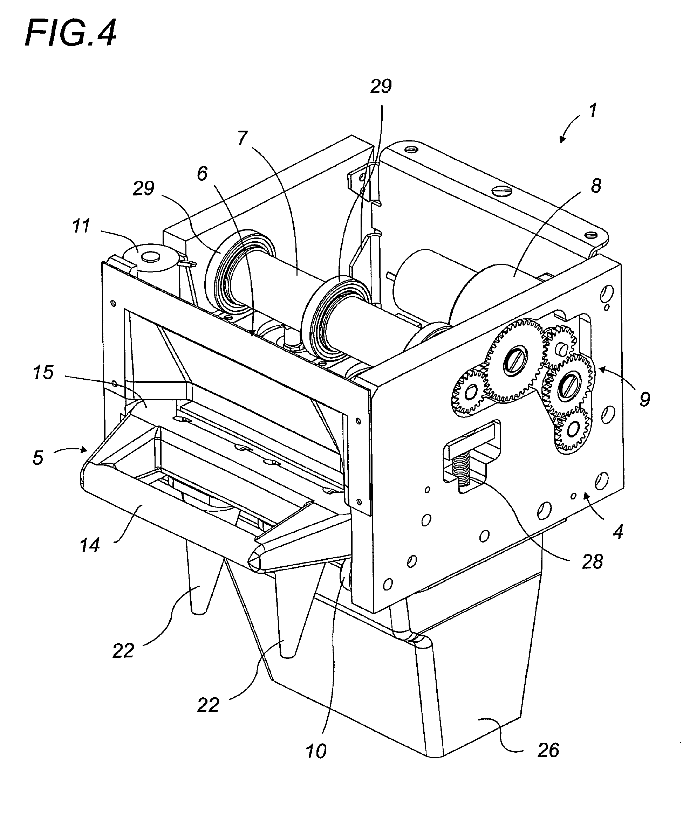

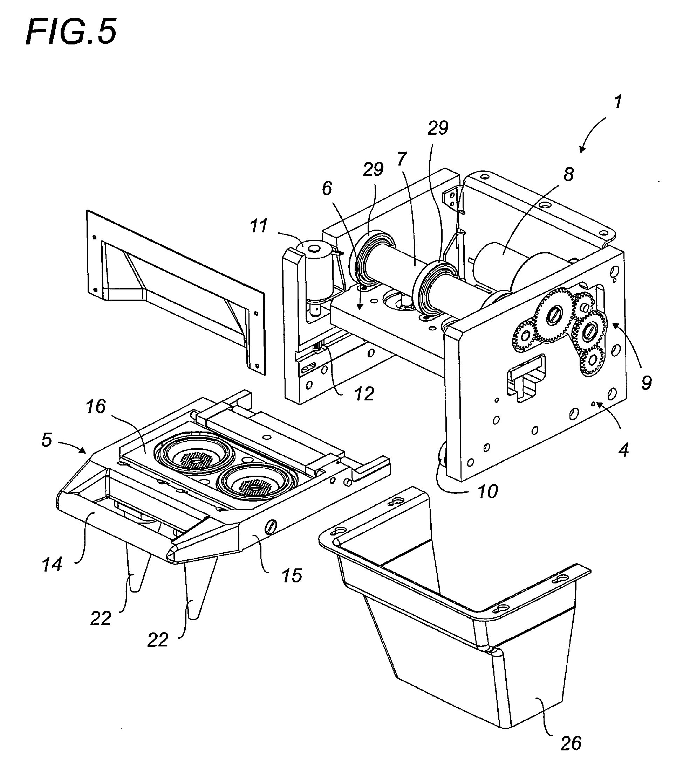

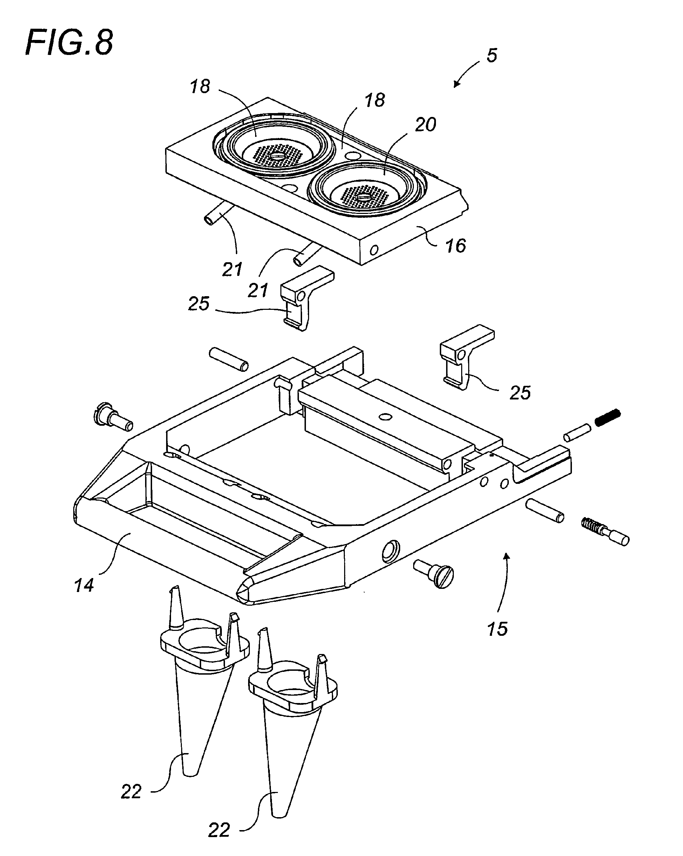

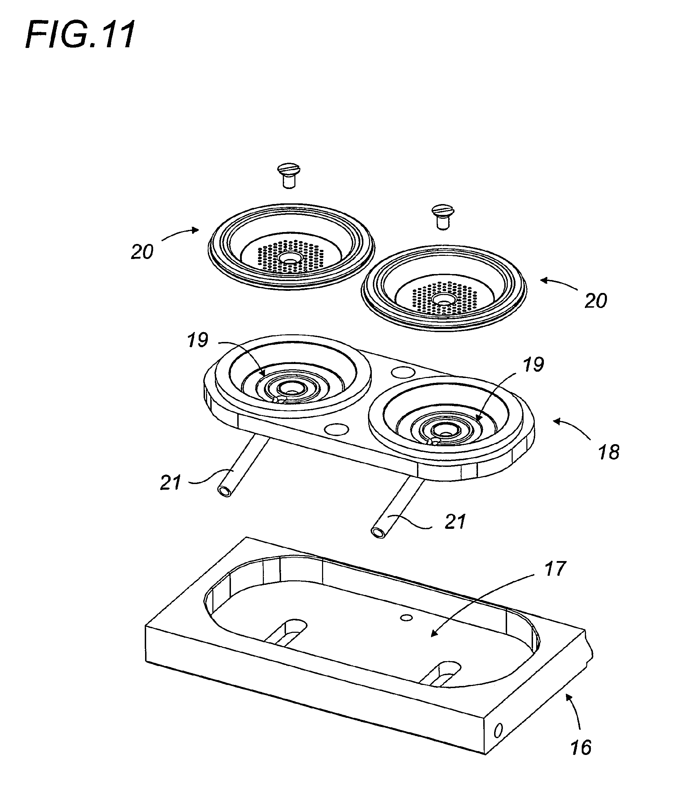

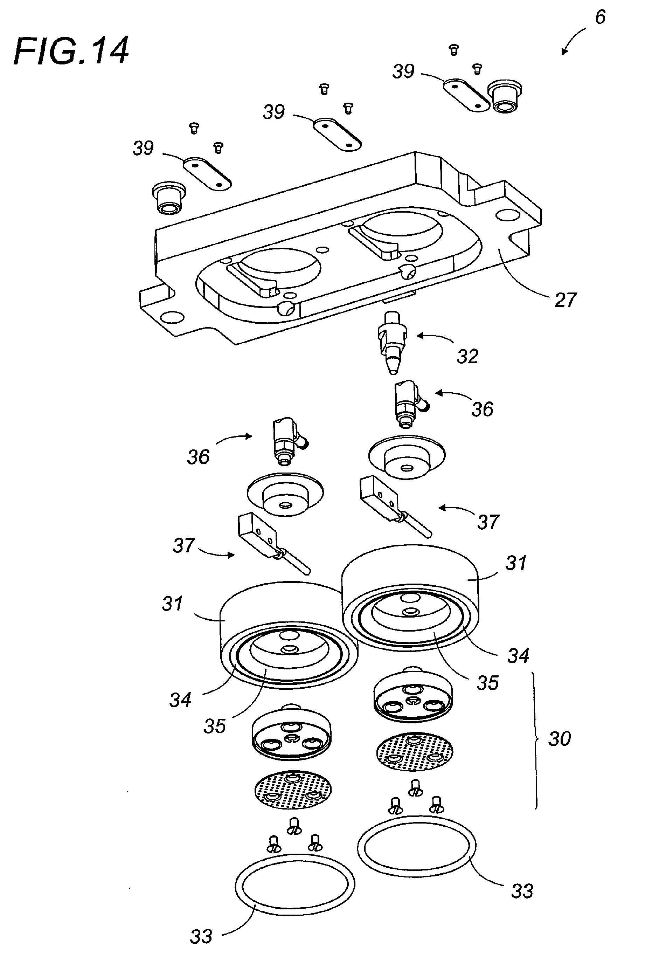

Le groupe de préparation de café selon la présente invention va maintenant être décrit de façon détaillée en référence aux figures 1 à 25. Les éléments équivalents représentés sur les différentes figures porteront les mêmes références numériques.

Par café, il faut comprendre ci-après toute boisson notamment chaude réalisée par extraction hydraulique d'un produit contenu dans une dosette préemballée, qu'il s'agisse de café, de thé ou de tout autre produit ou mélange de produits pour préparer une boisson. De même, par machine à café, nous entendons ici toute machine automatique, semi-automatique ou distributeur public à sous ou à jeton permettant de préparer des boissons par extraction à partir d'une dosette préemballée.

Le groupe selon l'invention pour la préparation du café expresso à partir d'au moins une dosette est principalement destiné à être monté sur une machine à café professionnelle du type de celles existant dans les bars, dans les restaurants, dans les collectivités et autres lieux de grande consommation telle que représentée sur les figures 1 et 2. Ces machines sont réputées pour préparer le café expresso de la meilleure façon possible car elles mettent en oeuvre les conditions optimales de préparation du café expresso quant à l'eau : température, pression, quantité et quant à la vitesse d'exécution.

Ces machines, en plus d'un ou de plusieurs groupe(s) de préparation, comprennent habituellement une admission d'eau, une chaudière sous pression, un système hydraulique, une ou plusieurs sortie(s) d'eau chaude et une ou plusieurs sortie(s) de vapeur.

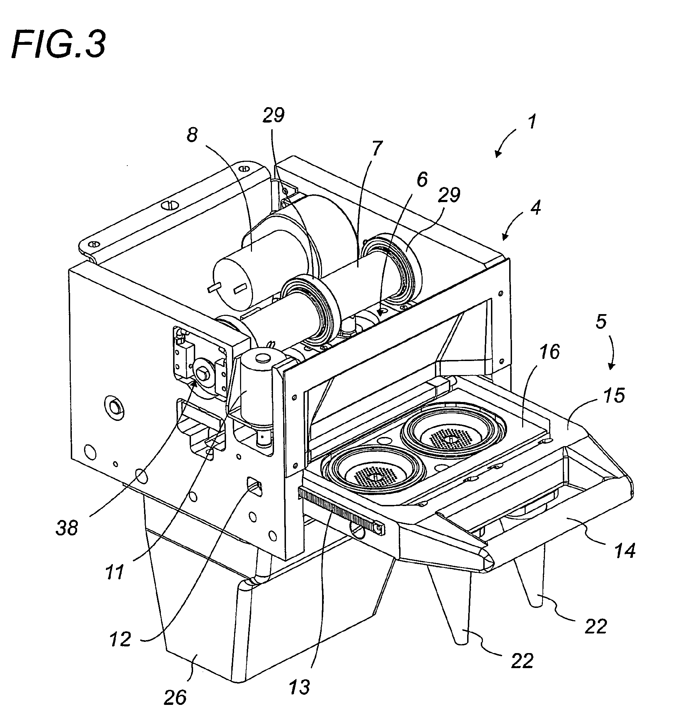

Le groupe 1 selon l'invention, tel que représenté sur les figures 3 à 5, consiste en une unité fonctionnelle à monter sur le bâti 2 de la machine à café 3. Chaque machine 3 peut en admettre un, deux, trois voire quatre ou plus selon sa capacité.

L'unité fonctionnelle est un support mécanique 4 qui regroupe tous les composants réalisant l'unité fonctionnelle du groupe de préparation 1 selon l'invention.

Il s'agit des principaux éléments suivants :
- un tiroir mobile 5 entre une position d'extraction, une position de chargement et une position d'évacuation d'une ou des deux dosette(s),
- un bloc d'injection 6 fermant le support 4 dans sa partie avant supérieure au-dessus du tiroir 5 dans sa position d'extraction et mobile dans son ensemble en rapprochement et en éloignement du tiroir 5,
- un arbre à cames 7 actionnant le bloc d'injection en mouvements de rapprochement du tiroir, le retour en éloignement s'effectuant automatiquement par une force de rappel,
- un moteur unique d'entraînement 8 pour tout le cycle de fonctionnement et tous les organes, et
- une transmission de mouvement 9 entre la sortie du moteur unique et les organes commandés.

On décrira maintenant en détail les différents moyens généraux énoncés ci-dessus.

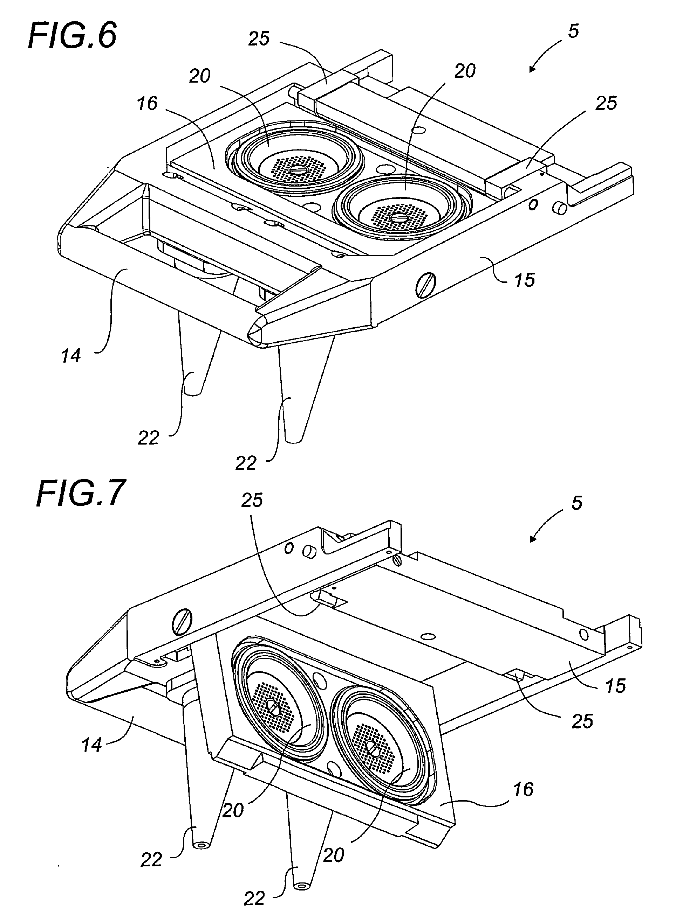

Le tiroir mobile 5, représenté sur les figures 6 à 8, est un ensemble monté mobile en translation horizontale, par exemple sur des galets de roulement 10, entre une position sortie et une position rentrée. Il est prévu de façon optionnelle un actionnement motorisé par l'intermédiaire d'un dispositif annexe à moteur séparé 11 et d'un entraînement à pignon 12 s'engrenant par exemple sur une crémaillère 13 fixée sur un des chants du tiroir 5. Ce moteur 11 pour actionner l'ouverture et la fermeture du tiroir étant avantageusement prévu de manière à ne pas risquer de pincer les doigts de l'utilisateur, par exemple avec l'utilisation d'un couple faible, comme celui des lecteurs CD.

Dans sa version à actionnement manuel, ce tiroir 5 comporte une poignée de préhension 14 sur sa face avant.

Dans une version préférée, le tiroir 5 est mobile jusque dans une position extrême limitée par un dispositif d'arrêt de butée comportant un capteur permettant de s'assurer que le tiroir 5 est bien fermé.

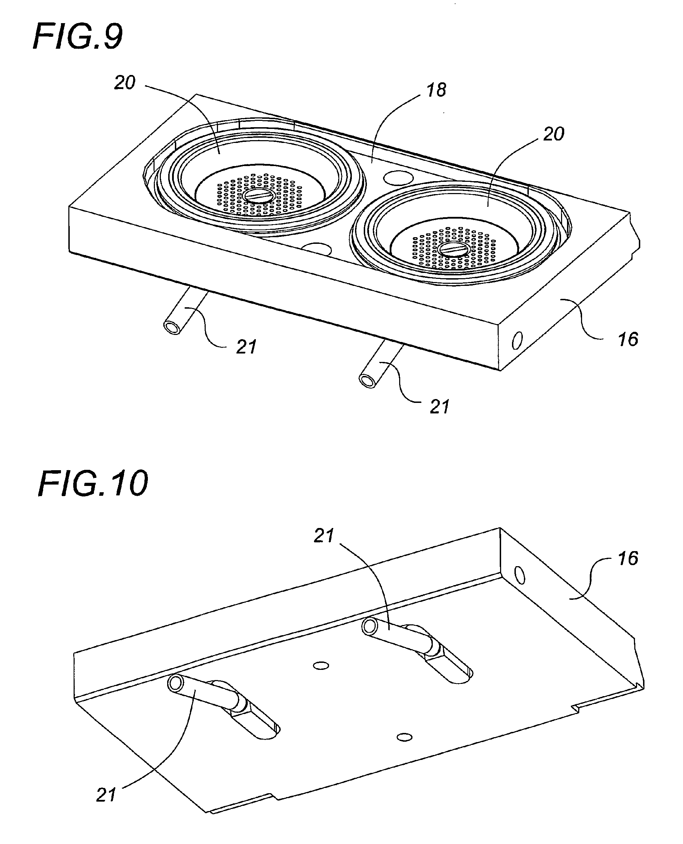

Le tiroir 5 est formé d'un cadre porteur 15 supportant un plateau récepteur basculant 16. Ce plateau récepteur 16, représenté sur les figures 9 à 11, présente un évidemment 17 dans lequel vient se loger un porte-filtre 18, à savoir une plaque comportant deux cavités de réception 19 servant chacune de logement à une coupelle perforée 20.

Ces cavités 19 servant de logement présentent chacune un canal d'évacuation dans sa face supérieure. Chacun de ces canaux d'évacuation communiquent par un passage prolongé par un conduit d'évacuation 21 avec une pièce d'écoulement 22 servant de bec verseur dans une tasse 23 ou dans un gobelet.

Chaque cavité 19 forme un siège pour une coupelle perforée 20 appelée classiquement passoire. Dans l'une ou l'autre ou les deux sera placée à chaque fois une dosette 24 renfermant la dose de café à extraire.

Chaque passoire 20 est fixée dans sa cavité du porte-filtre 18 à l'aide d'une ou plusieurs vis. Dans une variante du mode de réalisation, il peut également être envisagé de réaliser d'une seule pièce la plaque porte-filtre 18 à cavités de réception et les passoires 20.

Le plateau récepteur 16 est monté basculant autour d'un axe avant transversal et maintenu à l'arrière pendant tout le fonctionnement de préparation du café par un mécanisme de verrouillage, par exemple sous la forme de deux crochets de verrouillage tels que 25. Le plateau récepteur 16 bascule en partie par gravité en fin de phase de préparation entre une position horizontale de fonctionnement et une position inclinée d'éjection vers le bas de la ou des deux dosettes 24, position d'éjection dans laquelle il arrive après libération des crochets de verrouillage 25. Il peut également être poussé éventuellement au début de l'ouverture par les ressorts de détection des dosettes 24, cette force initiale pouvant être ajustée en modifiant l'instant d'ouverture.

Le cadre 15 formant le support mécanique du tiroir 5 comprend, au niveau de l'axe de basculement du plateau récepteur 16, des butées par exemple sous la forme de deux bloc-tampons en matière souple pour provoquer en même temps que le basculement du plateau 16 vers le bas un choc suffisant pour permettre la sortie-éjection rapide et systématique des dosettes 24 de leur réceptacle et ne pas gêner par un bruit métallique désagréable.

Une trémie 26 guide les dosettes épuisées 24 dans leur chute vers un réceptacle à dosettes usagées situé au bas de la machine 3 ou sous celle-ci (non représenté).

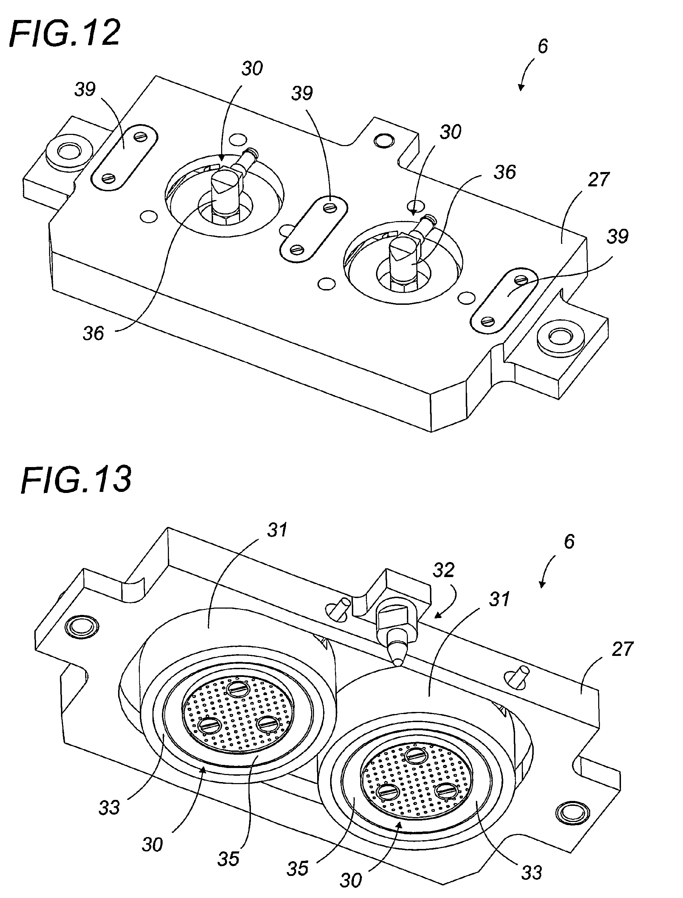

L'ensemble est fermé en partie supérieure par le bloc d'injection 6, représenté dans son ensemble sur les figures 12 à 14. Il est formé d'une plaque métallique mobile de support 27 montée en rappel élastique vers le haut par l'intermédiaire de forces élastiques symétriques par exemple sous la forme de deux ressorts tels que 28 prévus dans les parois latérales du support métallique 4 du groupe de préparation 1 selon l'invention. Le bloc d'injection 6 est actionné en mouvements de descente par l'appui de la partie saillante du profil de plusieurs cames, par exemple de trois cames 29 portées par ou profilées sur l'arbre à cames 7 entraîné en rotation par le moteur central unique d'entraînement 8 à travers la transmission réductrice 9 du type à pignons.

La plaque métallique mobile 27 du bloc d'injection 6 porte deux douchettes tels que 30 montées mobiles chacune à la manière d'un piston dans un cylindre 31 correspondant de protection, ou chemise de protection, saillant de la face inférieure.

Dans un mode préféré, le bloc d'injection 6 est monté sur le support mécanique du groupe en utilisant des éléments de liaison 32 à cône de centrage. Ceci permet en outre, lors de sa descente, de le positionner correctement au-dessus du plateau récepteur basculant 16.

En effet, la descente du bloc d'injection 6 est prévue pour que le bord inférieur de la chemise de protection 31 de chaque douchette 30 arrive en contact étanche avec le bord supérieur de la plaque porte-filtre 18 du tiroir 5 pour former une chambre étanche d'extraction ayant sensiblement la forme d'une dosette 24.

Afin d'assurer cette étanchéité, la partie inférieure des chemises de protection 31 du bloc d'injection 6 comporte un élément d'étanchéité, par exemple sous la forme d'un joint torique 33 logé dans une gorge circulaire 34.

Afin de s'adapter parfaitement à la forme de la dosette 24, le bord inférieur de la chemise de protection 31 de chaque douchette 30 présente une partie chanfreinée 35 concave à profil arrondi dont la courbure correspond sensiblement à celui des bords des dosettes 24.

Chaque douchette 30 est reliée hydrauliquement par son extrémité supérieure par un raccord 36 par exemple en équerre à un conduit d'amenée de l'eau chaude.

Chaque douchette 30 se présente sous la forme d'une tête de diffusion d'eau à face avant plane perforée et à entrée arrière raccordée au circuit de fourniture d'eau chaude sous pression de la machine à travers différents dispositifs de commande et de sécurité.

Chaque douchette 30 est associée à un détecteur de présence 37 de la dosette 24 par exemple basé sur le contact de butée de son front avant sur la face supérieure de la dosette 24.

Le détecteur de présence 37 peut par exemple prendre la forme d'un micro-interrupteur ou contacteur dont les contacts sont actionnés par l'extrémité interne du corps de la douchette 30 en fermeture ou en ouverture lors du contact de butée du front avant de la douchette 30 avec la face supérieure de la dosette 24. La détection peut se faire par contact ou par rupture de contact. Cette fonction sera mieux expliquée dans la partie dédiée au fonctionnement.

Afin de bien pouvoir coordonner le déroulement du cycle de fonctionnement, il y a lieu de connaître la position de l'arbre à cames 7 lors des principales phases. A cet effet, l'arbre à cames 7, entraîné par son moteur d'entraînement 8 et la transmission de mouvement 9, comporte à une de ses extrémités un détecteur de position angulaire 38, par exemple sous la forme d'un détecteur de point mort haut et bas de l'arbre à cames. Dans un mode de réalisation préféré, ces deux positions sont détectées à l'aide d'une zone locale en saillie formée sur le pourtour de l'extrémité de l'arbre à cames qui, lors de la rotation de l'arbre à cames, entre en contact tour à tour avec un parmi deux palpeurs opposés sur l'extrémité de l'arbre à cames 7. C'est le contact avec ces palpeurs qui transmet l'information sur la position de l'arbre à cames 7. Celui-ci se trouve en position de point mort haut lorsque la saillie est en contact avec le premier palpeur, et en position de point mort bas lorsque la saillie est en contact avec le deuxième palpeur.

Le mouvement de pression des cames 29 sur la plaque 27 du bloc d'injection 6 s'effectue de la façon suivante. Les parties saillantes des cames 29 viennent en contact d'appui de pression avec le bloc d'injection mobile 27 sur des patins d'appui 39. Les cames 29 présentent à cet effet un profil à zones saillantes de façon à réaliser tous les mouvements du bloc d'injection par un seul tour d'arbre à cames 7.

Il y a lieu de remarquer que l'on utilise pour tout le cycle de fonctionnement un moteur électrique d'entraînement unique 8 tournant toujours dans le même sens. Il n'est pas nécessaire de lui adjoindre un quelconque système de rattrapage de course liée à l'usure car le contact entre l'arbre à came 7 et le bloc d'injection 6 est réalisé préférentiellement par mouvement de roulement en appui sur un patin en acier inoxydable indéformable. En outre, un tel moteur unique 8 sollicité de façon régulière et toujours dans le même sens est bien moins sensible aux risques de pannes, ce qui accroît considérablement la fiabilité de l'ensemble du dispositif.

La transmission de mouvement 9 entre la sortie du moteur unique 8 et les organes commandés peut se réaliser de différentes façons. Dans le mode de réalisation préféré, cette transmission s'effectue à l'aide d'un engrenage à pignons montés à l'extrémité du moteur électrique et aux extrémités des cames.

La description précédente ci-dessus montre un groupe de préparation 1 fiable et peu onéreux à fabriquer. Ce groupe 1 permet le chargement d'au moins une et au plus de deux dosettes 24. Il comporte un moyen de détection individuelle de présence de chaque dosette 24 pour chaque emplacement prévu pour celle-ci.

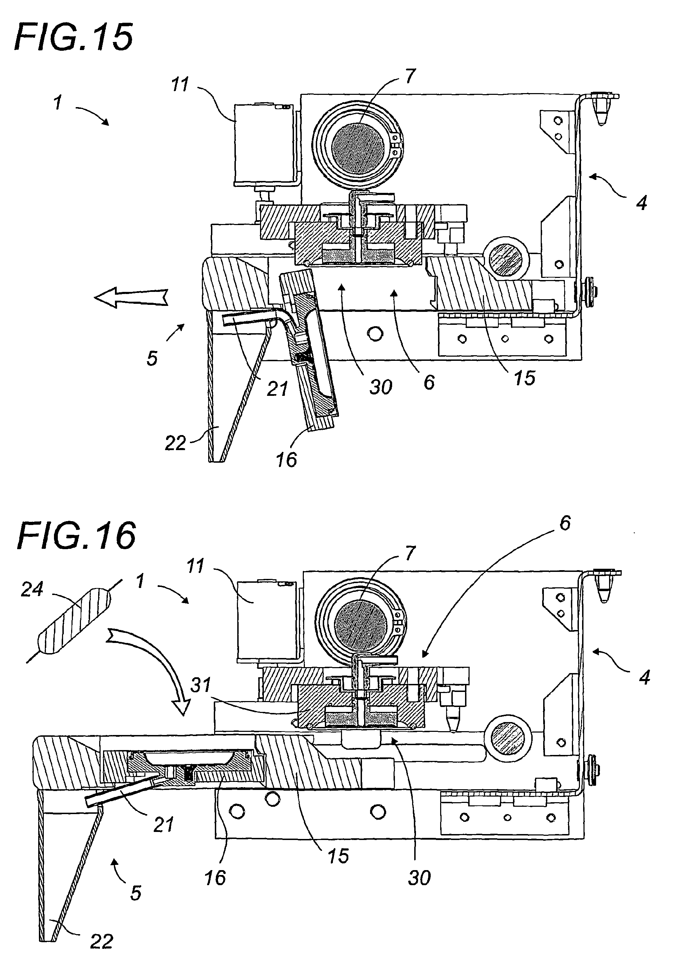

En se référant aux figures 15 à 25, nous allons maintenant procéder à la description détaillée du fonctionnement du groupe de préparation 1 selon l'invention et à son mode d'utilisation en décrivant en détail les différentes étapes formant un cycle complet du dispositif.

Dans le mode de réalisation décrit, le cycle complet de fonctionnement s'effectue en un seul tour de l'arbre à cames 7.

Dans le cas de l'utilisation simultanée de plusieurs groupes 1 selon l'invention, le mode d'utilisation est le même, les groupes étant indépendants dans leur fonctionnement.

### Figure 15 - Position de repos et position initiale

Le tiroir 5 se trouve en position fermée et le plateau récepteur basculant 16 est libéré des crochets de verrouillage 25. Dans le mode de réalisation préféré ce dernier est presque vertical. Il est vide et à l'air libre, ce qui assure les fonctions sanitaires souhaitées pour le dispositif.

### Figure 16 - Ouverture du tiroir

L'utilisateur saisi la poignée 14 et tire le tiroir 5 vers lui jusqu'à une position extrême limitée par un dispositif d'arrêt. Le plateau récepteur 16 basculant entre en contact roulant avec un galet pivotant situé sous son axe de pivotement ce qui le fait basculer vers le haut et l'amène en position horizontale. Il est maintenu en position fermée par les crochets de verrouillage 25.

Dans une variante, l'ouverture et la fermeture du tiroir 5 peuvent être motorisées à l'aide d'un second moteur 11 couplé au tiroir 5 par exemple avec un système à crémaillère. Il suffit alors de commander le fonctionnement du moteur 11 pour amener le tiroir 5 en position de chargement.

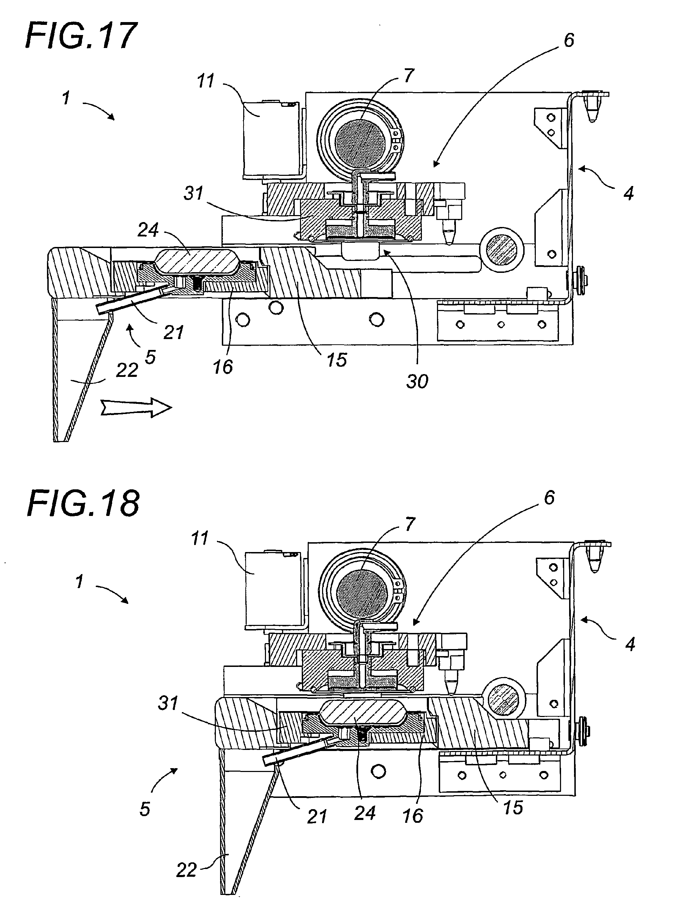

### Figure 17 - Dépose des dosettes et positionnement des tasses

L'utilisateur dépose une dosette dans une des deux ou les deux passoire(s) 20 du bloc. La passoire 20 ayant une forme de cuvette circulaire dont le diamètre est sensiblement égal à ou légèrement différent de celui des dosettes 24, le positionnement de la dosette 24 dans la passoire 20 est rapide et aisé. L'accès aux passoires 20 étant optimal, cette mise en place de dosette 24, est simple, rapide et sans danger.

Parallèlement, l'utilisateur place une tasse à café 23 sous le bec 22 correspondant de chaque passoire 20 dans laquelle se trouve une dosette 24 ou une tasse 23 sous les deux sorties.

### Figure 18 - Fermeture du tiroir

L'utilisateur repousse le tiroir 5 dans le support mécanique 4 jusque dans une position extrême limitée par un dispositif d'arrêt de butée.

Avantageusement, ce dispositif d'arrêt peut comporter un capteur permettant de s'assurer que le tiroir 5 est bien fermé. Cette sécurité permet de confirmer le bon positionnement du tiroir.

### Non représenté - Choix de la quantité de café

L'utilisateur sélectionne la quantité de café souhaitée sur la machine, ce qui correspond généralement à ce que l'on appelle un café long ou court. A cet effet, l'utilisateur a le choix entre différentes sélections de volumes par groupe correspondant. S'il sélectionne un café court et qu'il y a une dosette, il obtiendra alors un café court. S'il sélectionne un café court et qu'il y a deux dosettes, il obtiendra alors deux cafés courts.

L'utilisateur n'a pas à se demander s'il a placé une ou deux dosette(s) 24 et s'il n'en a placé qu'une, il n'a pas à se demander de quel coté.

Une fois cette sélection faite, le moteur unique du groupe 8 selon l'invention est mis en marche.

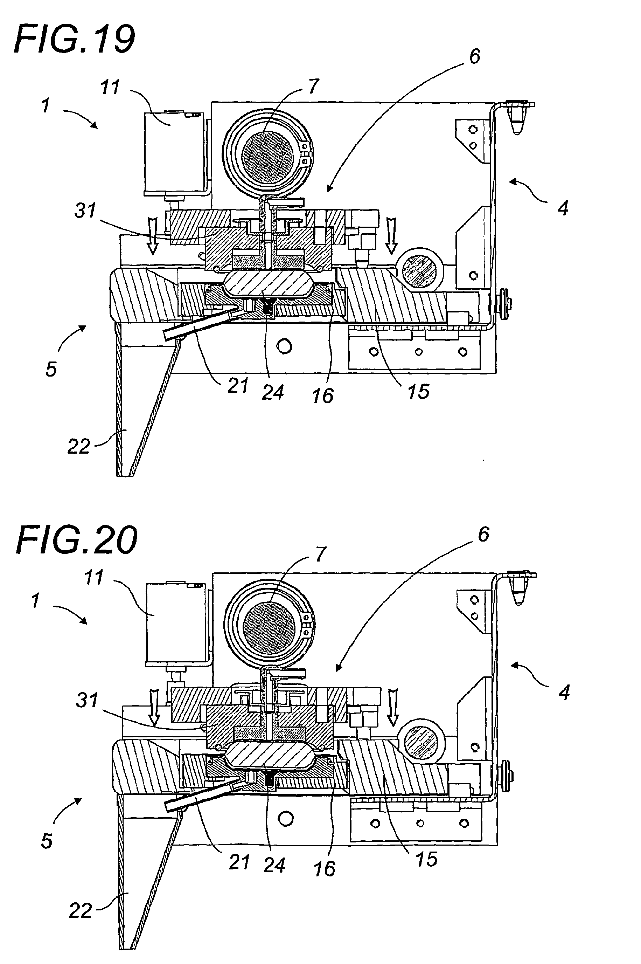

### Figure 19 - Abaissement du bloc d'injection

Le moteur unique 8 entraîne l'arbre à cames 7 en rotation qui, par appui de la partie saillante des cames, fait descendre le bloc d'injection 6.

### Figure 20 - Détection de la présence d'une dosette

Lors de la descente du bloc d'injection 6, chaque douchette 30 se trouve en position basse et sa face inférieure vient sensiblement à ras avec celle de sa chemise de protection 31.

Au cours de cette descente, si une dosette 24 est présente dans la passoire 20, celle-ci arrive en contact par sa face supérieure avec la face inférieure de la douchette 30. Tandis que le bloc d'injection 6 continue à descendre pour arriver en contact avec la plaque porte-filtre 18 du tiroir 5, la douchette 30 reste immobile par rapport au support mécanique 4, ce qui la fait remonter dans sa chemise de protection 31 d'une hauteur correspondant à celle de la partie de la dosette 24 faisant saillie hors de la passoire 20.

Arrivée en position haute dans sa chemise de protection 31, la partie supérieure du corps de la douchette 30 actionne le détecteur de présence de dosette 37.

Au cours de cette descente, si une passoire 20 ne comporte pas de dosette 24, la douchette 30 qui lui correspond ne remonte pas dans sa chemise de protection 31 et le détecteur de présence de dosette 37 n'est pas actionné.

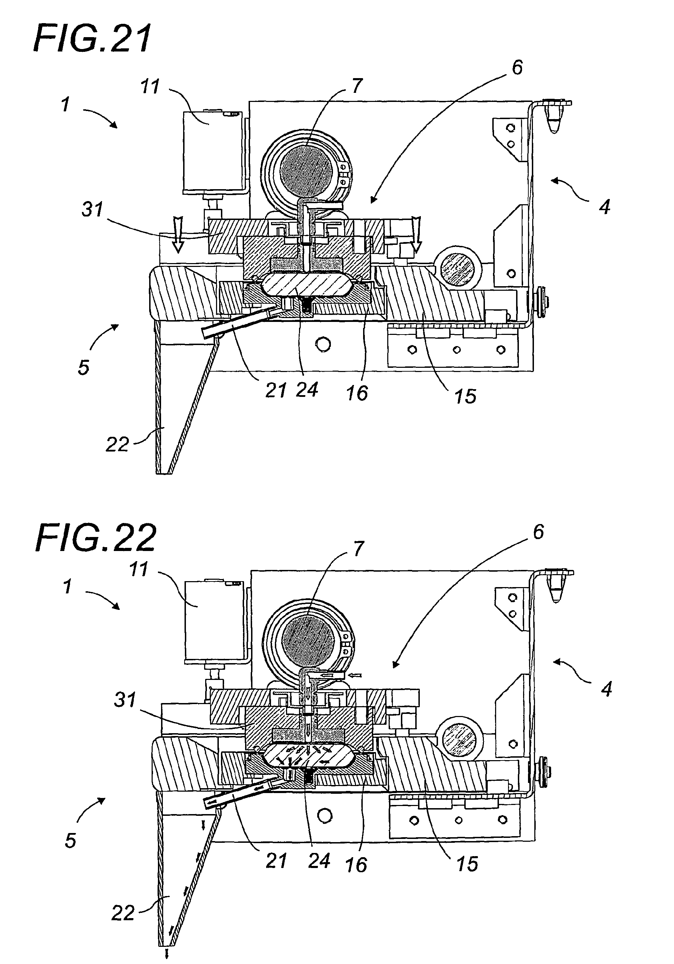

### Figure 21 - Fermeture étanche de la chambre d'extraction

La descente du bloc d'injection 6 se poursuit jusqu'à ce que le bord inférieur de la chemise de protection 31 de chaque douchette 30 arrive en contact étanche avec le bord supérieur de la plaque porte-filtre 18 du tiroir 5 pour former une chambre étanche d'extraction.

Cette étape se déroule simultanément à la précédente.

Non représenté - Détection du point mort bas de l'arbre à cames

Lorsque la chambre d'extraction est fermée, c'est-à-dire que le bloc d'injection 6 se trouve en position basse, le détecteur de position angulaire 38 détecte la position de point mort bas de l'arbre à cames 7.

Comme indiqué dans le mode de réalisation préféré, cette position est détectée à l'aide d'une saillie formée sur le pourtour de l'extrémité de l'arbre à cames 7 qui vient en contact avec le palpeur de position de point mort bas.

### Figure 22 - Préparation du café

Le palpeur de position de point mort bas actionne le système hydraulique qui envoie la quantité d'eau sélectionnée au cours de l'étape de choix de la quantité de café à travers chacune des douchettes 30 pour lesquelles la présence d'une dosette 24 a été détectée au cours de l'étape de détection de la présence d'une dosette 24.

L'eau, représentée par des flèches blanches, passe à travers la douchette sélectionnée 30, puis à travers la dosette 24, la passoire 20, le conduit d'évacuation 21 et le bec verseur 22 qui lui sont associés pour finir par s'écouler dans la tasse à café placée sous le bec.

Le café extrait après le passage de l'eau à travers la dosette 24 est représenté par des flèches noires.

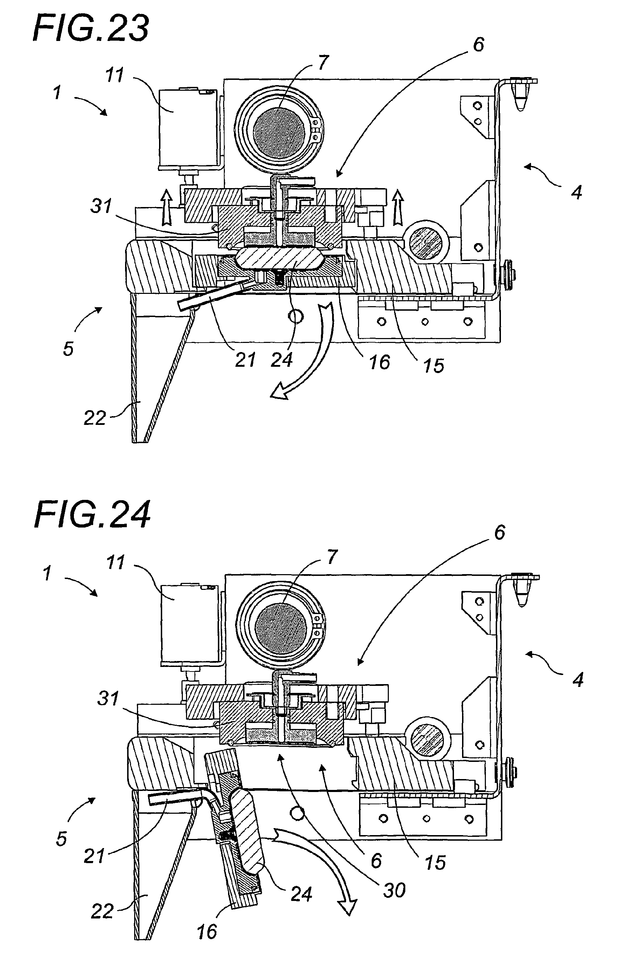

### Figure 23 - Décompression des chambres d'extraction

Quelques instants après la fin de l'extraction, l'arbre à cames 7 recommence à tourner et supprime graduellement l'appui de la partie saillante du profil des cames 29. Les forces élastiques symétriques sous la forme des deux ressorts 28 rappellent le bloc d'injection 6 en montée.

Les pièces formant les chambres d'extraction se dissocient, ce qui provoque la décompression.

Cette décompression peut faire remonter une certaine quantité d'eau et de café vers le système hydraulique de la machine 3, ce qui peut à terme encrasser ce dernier.

L'utilisation d'une vanne à trois voies permet d'éviter que la dosette soit gorgée d'eau lors de l'éjection, ce qui évite les éclaboussures et assure la propreté du dispositif. Un tel dispositif utilisant une vanne à trois voies est connu de l'homme du métier et ne sera pas décrit en détail.

Après décompression de la chambre d'extraction, les éventuelles dosettes épuisées 24 restent dans les passoires 20.

### Figure 24 - Basculement du plateau récepteur

L'arbre à cames 7 continue à tourner et le système de transmission à cames commande l'ouverture des crochets 25 du mécanisme de verrouillage du plateau récepteur basculant 16. Ce dernier bascule en partie par gravité autour de son axe de pivotement jusqu'en position presque verticale et frappe les butées réalisées sous la forme de bloc-tampons en matière souple.

Le choc provoqué se traduit par un bruit étouffé. Il a pour but d'éjecter les dosettes 24 épuisées de leur réceptacle 20. Les dosettes 24 tombent alors par gravité et sont guidées dans leur chute par la trémie 26 vers un réceptacle à dosettes usagées.

Au cours de cette étape, les douchettes 30 sont en position d'appui libre sur les dosettes 24, et la force qu'elles exercent sur celles-ci peut aider au décollement des dosettes 24 hors de leur réceptacle 20 en augmentant la vitesse d'ouverture et donc le choc en fin de course.

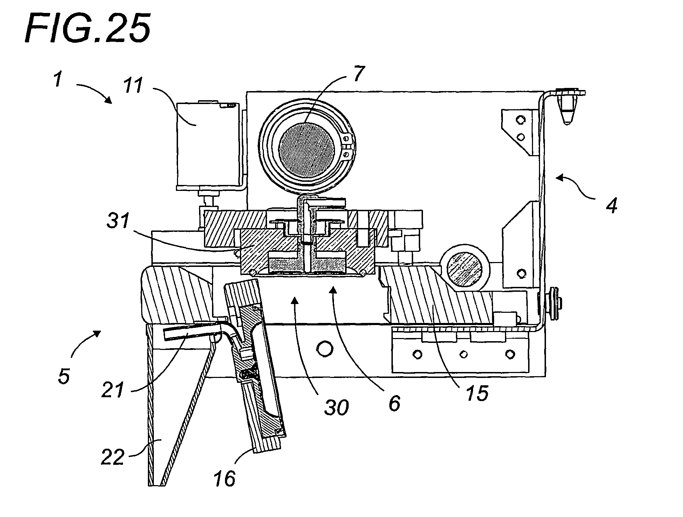

### Figure 25 - Mise en position de repos

L'arbre à cames 7 continue de tourner et le bloc d'injection 6 arrive en position haute. Le détecteur de position angulaire 38 détecte alors la position de point mort haut de l'arbre à cames 7 et coupe le moteur 8.

Le tiroir 5 est toujours en position fermée et le plateau récepteur basculant 16 se trouve libéré des crochets de verrouillage 25. Il est vide et à l'air libre, ce qui réduit notablement le risque sanitaire pour le dispositif. Le groupe 1 se trouve en position finale qui est aussi la position initiale de la figure 15. Il est prêt à recommencer un nouveau cycle.

A la lecture de la description du cycle qui précède, il apparaît que le groupe de préparation 1 selon l'invention est simple d'utilisation et sans danger pour l'utilisateur, et qu'il satisfait pleinement aux conditions sanitaires souhaitées.

Ce cycle automatisé nécessite des circuits électroniques d'automatisation non décrits. En effet, la conception de tels circuits électroniques adaptés aux spécificités prévues pour le groupe de préparation relève de simples études d'automatisation.

Dans le mode de réalisation préféré développé précédemment, le tiroir 5 est à actionnement manuel. Comme indiqué, on peut cependant le motoriser par l'intermédiaire d'un dispositif annexe à moteur, ce moteur 11 pouvant par exemple être actionné pour sa fermeture lors du choix de la quantité de café par l'utilisateur ou par l'intermédiaire d'un bouton dédié et pour son ouverture lors d'une étape de mise en position de dépose des dosettes 24 dans laquelle le tiroir 5 sera ouvert à partir de la position de repos correspondant à un tiroir fermé.

On peut également envisager de nombreuses variantes des modes précédents de réalisation et de fonctionnement sans s'écarter de la portée de l'invention.

On peut par exemple modifier les étapes de fonctionnement afin de les adapter aux exigences de l'utilisateur, par exemple en prévoyant une position de repos dans laquelle le tiroir 5 est ouvert au lieu d'être fermé.

On peut aussi envisager d'adapter le groupe 1 selon l'invention à d'autres formes de dosettes 24. Pour cela, il suffit d'adapter la forme des passoires 20 et des dosettes 24, sans qu'il soit nécessaire de modifier le reste de la machine 3.

Il est également possible d'adapter le groupe 1 selon l'invention à des machines 3 destinées à un usage domestique plutôt que professionnel.

On peut aussi adapter le système d'automatisation afin qu'il soit possible de préparer simultanément un café court au niveau d'une dosette et un café long au niveau de l'autre.

Un perfectionnement très intéressant consiste également à prévoir un code d'identification sur les dosettes 24 qui peut être lu par un dispositif adapté du groupe 1 de la machine 3 afin de reconnaître de quel type de dosette 24 il s'agit. Ce code d'identification peut par exemple consister en un code à barres, une puce électronique, une signature magnétique, une impression en relief et/ou en creux ou autre, qui est lu par exemple respectivement par un dispositif de lecture optique, magnétique, électronique, mécanique ou autre.

Il est ainsi possible de différencier des dosettes en fonction du type de café qu'elles contiennent et la machine peut en conséquence adapter la quantité d'eau, sa température, sa pression et plus généralement tous les paramètres de la machine en fonction de celles-ci, ceci pouvant s'effectuer individuellement pour chaque dosette, le groupe selon l'invention prévoyant une chambre d'extraction, un moyen de détection individuel de présence de chaque dosette et un système hydraulique propre à chaque passoire et donc à chaque dosette.

Le dispositif de lecture des codes d'identification des dosettes à prévoir pour chaque passoire n'a pas besoin d'être décrit car il existe déjà dans son principe.

Dans ce mode de réalisation, il peut également être envisagé de remplacer le moyen mécanique de détection individuel de présence de chaque dosette par le dispositif de lecture des codes d'identification des dosettes en adaptant ce dernier à cet effet.

## Revendications

1. Groupe de préparation automatique (1) d'une ou de deux doses séparées ou simultanées d'une boisson chaude notamment de café de type expresso à partir d'eau chaude sous pression et indifféremment d'une ou de deux quantité(s) dosée(s) d'un produit sec enfermée(s) chacune dans un conditionnement appelé dosette (24), groupe sous la forme d'un support mécanique (4) destiné à être monté dans une machine de préparation d'une boisson chaude (3) notamment de café, se composant d'un seul tiroir mobile (5) entre une position d'extraction, une position de chargement et une position d'évacuation d'une ou de deux dosette(s) (24), le tiroir mobile (5) partant un plateau récepteur (16) d'extraction, le groupe se composant en outre d'un bloc d'injection (6) fermant le support (4) dans sa partie avant au-dessus du tiroir mobile (5) dans sa position d'extraction et déplaçable dans son ensemble en rapprochement et en éloignement du tiroir mobile (5) **caractérisé en ce que** :
- le plateau récepteur (16) présente deux emplacements individuels séparés, prévus chacun pour une dosette (24),
- le plateau récepteur (16) est monté basculant sur le tiroir mobile (5) autour d'un axe transversal avant entre une position horizontale d'extraction ou de chargement et une position inclinée d'évacuation de l'une ou des deux dosette(s) (24),
- un arbre (7) à cames à détecteur de position angulaire dont les cames (29) sont telles que l'on réalise tous les mouvements du bloc d'injection (6) correspondant à un cycle par un seul tour d'arbre à cames (7) provenant d'un seul moteur (8) tournant toujours dans le même sens à travers une transmission réductrice à pignons (9) actionnant le bloc d'injection (6) en mouvements de rapprochement vers le tiroir (5), le retour en éloignement du tiroir (5) s'effectuant automatiquement par une force de rappel (28),
- l'arbre (7) à cames (29) entraîné par le moteur unique (8) met en mouvement ou en fonction tous les organes commandés,
- un moyen (37) de détection individuelle de présence de chaque dosette (24) dans le plateau récepteur (16).

2. Groupe de préparation selon la revendication 1, **caractérisé en ce que** les mouvements du bloc d'injection provoqués par les cames le sont à chaque fois par un mouvement de roulement de la partie de la came en appui sur un patin indéformable.

3. Groupe de préparation selon la revendication 1, **caractérisé en ce que** les profils des cames (29) présentent des parties saillantes qui viennent en appui de pression sur le bloc d'injection mobile (6) au niveau de patins d'appui (39) pour ses mouvements de descente.

4. Groupe de préparation selon l'une quelconque des revendications précédentes, **caractérisé en ce que** l'arbre à cames (7) comporte à l'une de ses extrémités un détecteur de position angulaire (38).

5. Groupe de préparation selon la revendication précédente, **caractérisé en ce que** le détecteur de position angulaire (38) est un détecteur de point mort haut et bas de l'arbre à cames.

6. Groupe de préparation selon l'une quelconque des revendications précédentes, **caractérisé en ce que** le bloc d'injection (6) est formé d'une plaque métallique mobile de support (27) montée en rappel élastique vers le haut par l'intermédiaire de forces élastiques (28).

7. Groupe de préparation selon la revendication précédente, **caractérisé en ce que** la plaque métallique mobile (27) du bloc d'injection (6) comporte deux douchettes (30) raccordées au circuit hydraulique intégré au reste de la machine (3).

8. Groupe de préparation selon la revendication précédente, **caractérisé en ce que** chaque douchette (30) se présente sous la forme d'une tête de diffusion d'eau à face avant plane perforée et à entrée arrière raccordée au circuit de fourniture d'eau chaude sous pression de la machine à travers différents dispositifs de commande et de sécurité.

9. Groupe de préparation selon l'une quelconque des revendications 7 ou 8, **caractérisé en ce que** les douchettes (30) sont montées mobiles chacune à la manière d'un piston dans une chemise de protection (31) saillant de la face inférieure de la plaque métallique mobile de support (27).

10. Groupe de préparation selon la revendication précédente, **caractérisé en ce que** la partie inférieure des chemises de protection (31) du bloc d'injection (6) comportent un élément d'étanchéité (33).

11. Groupe de préparation selon l'une quelconque des revendications 9 ou 10, **caractérisé en ce que** le bord inférieur de la chemise de protection (31) de chaque douchette (30) présente une partie chanfreinée (35) concave à profil arrondi dont la courbure correspond sensiblement à celle des bords des dosettes (24).

12. Groupe de préparation selon l'une quelconque des revendications 7 à 11, **caractérisé en ce qu'**à chaque douchette (30) est associé un détecteur de présence (37) d'une dosette (24) basé sur le contact de butée de son front avant de la douchette (30) sur la face supérieure de la dosette (24).

13. Groupe de préparation selon la revendication précédente, **caractérisé en ce que** le détecteur de présence de dosette (37) comprend un micro-interrupteur ou contacteur dont les contacts sont actionnés par l'extrémité interne du corps de la douchette (30) en fermeture ou en ouverture lors du contact de butée du front avant de la douchette (30) avec la face supérieure de la dosette (24).

14. Groupe de préparation selon l'une quelconque des revendications précédentes, **caractérisé en ce que** le tiroir (5) est un ensemble monté mobile en translation horizontale, par exemple sur galets de roulement (10), entre une position sortie et une position rentrée.

15. Groupe de préparation selon à revendication précédente, **caractérisé en ce que** le tiroir mobile (5) est motorisé par l'intermédiaire d'un moteur auxiliaire (11) et d'un entraînement à pignon (12) s'engrenant sur une crémaillère (13) fixée sur un des chants du tiroir (5).

16. Groupe de préparation selon l'une quelconque des revendications précédentes, **caractérisé en ce que** le tiroir (5) est formé d'un cadre porteur (15) supportant un plateau récepteur basculant (16).

17. Groupe de préparation selon la revendication précédente, **caractérisé en ce que** le plateau récepteur basculant (16) est monté pivotant autour d'un axe avant transversal et maintenu à l'arrière par un mécanisme de verrouillage en position de travail.

18. Groupe de préparation selon la revendication précédente, **caractérisé en ce que** le mécanisme de verrouillage comprend deux crochets de verrouillage (25).

19. Groupe de préparation selon l'une quelconque des revendications 17 ou 18, **caractérisé en ce que** le plateau récepteur (16) est maintenu pendant tout le fonctionnement de préparation du café par le mécanisme de verrouillage et **en ce qu'**il bascule après libération du mécanisme de verrouillage en fin de fonctionnement entre une position horizontale de fonctionnement et une position inclinée d'éjection vers le bas dans laquelle il arrive par gravité.

20. Groupe de préparation selon l'une quelconque des revendications 16 à 19, **caractérisé en ce que** le plateau récepteur (16) présente un évidemment dans lequel est logé un porte-filtre (18) comportant deux cavités de réception (19) servant chacune de logement pour une coupelle perforée ou passoire (20) et présentant chacune un canal d'évacuation (21) dans sa face supérieure, et **en ce que** dans l'une ou l'autre ou les deux passoires (20) est ou sont placée (s) à chaque fois une dosette (24) renfermant la dose de café à extraire.

21. Groupe de préparation selon la revendication précédente, **caractérisé en ce que** chaque canal d'évacuation communique par un passage, prolongé chacun par un conduit souple d'évacuation (21), avec une pièce d'écoulement (22) servant de bec verseur.

22. Groupe de préparation selon l'une quelconque des revendications 16 à 21, **caractérisé en ce que** le cadre (15) formant le support mécanique du tiroir (5) comprend des butées.

23. Groupe de préparation selon la revendication précédente, **caractérisé en ce que** les butées comportent des tampons en matière souple.

24. Groupe de préparation selon l'une quelconque des revendications précédentes, **caractérisé en ce que** la descente du bloc d'injection (6) est prévue pour que le bord inférieur de la chemise de protection (31) de chaque douchette (30) arrive en contact étanche avec le bord supérieur de la plaque porte-filtre (18) du tiroir (5) pour former une chambre étanche d'extraction ayant sensiblement la forme d'une dosette (24).

25. Groupe de préparation selon l'une quelconque des revendications précédentes, **caractérisé en ce qu'**une trémie (26) guide les dosettes (24) épuisées dans leur chute vers un réceptacle à déchets situé au bas de la machine ou sous celle-ci (3).

26. Groupe de préparation selon l'une quelconque des revendications précédentes, **caractérisé en ce qu'**il comprend en outre un ou plusieurs dispositif(s) de lecture optique, magnétique, électronique, mécanique ou similaire de codes d'identification présents sur les dosettes (24).

## Claims

1. A unit (1) for the automatic preparation of one or two separate or simultaneous servings of a hot beverage, especially espresso-type coffee, from hot water under pressure and indifferently from one or two measured quantities of a dry product each contained in a packaged called a pod (24), said unit being in the form of a mechanical support (4) designed to be mounted in a hot beverage preparation machine (3), especially a coffee machine, consisting of only one drawer (5) movable between a position for extracting, a position for loading, and a position for discharging one or two pods (24), the movable drawer (5) carrying a receiving platform (16) for extracting, said unit further consisting of an injection block (6) closing the front portion of the support (4) above the movable drawer (5) in its extraction position and movable in its entirety toward and away from the movable drawer (5) **characterised in that**:
• the receiving platform (16) has two separate individual locations, each of them being designed for one pod (24),
• the receiving platform (16) is mounted so that it can tilt on the movable drawer (5) on a front transverse axle between a horizontal position for extracting or for loading and an angled position for discharging one or two pods (24),
• a cam shaft (7) with an angular position detector whose cams (29) are such that all the movements of the injection block (6) corresponding to a cycle are accomplished by a single rotation of the cam shaft (7) driven to rotate in the same direction by a single drive motor (8) through a pinion reduction transmission (9) activating the injection block (6) to move towards the drawer (5), with its return movement away from the drawer (5) accomplished automatically using a recall force (28);
• the shaft (7) with cams (29) driven by the single drive motor (8) activates all the elements it controls to move or to operate,
• an individual presence detector (37) for each pod (24) in the receiving platform (16).

2. A preparation unit (1) according to claim 1 **characterised in that** the movements of the injection block (6) induced by the cams (29) are, each time, induced by a rolling movement of the cam part which is pressed against a rigid pod plate.

3. A preparation unit (1) according to the preceding claim **characterised in that** the cams (29) are shaped with projections that press against the movable injection block (6) near the sliding contacts (39) used during its descent.

4. A preparation unit (1) according to any one of the preceding claims **characterised in that** the cam shaft (7) comprises at one extremity an angular position detector (38).

5. A preparation unit (1) according to the preceding claim **characterised in that** the angular position detector (38) detects of the upper and lower neutral positions of the cam shaft.

6. A preparation unit (1) according to any one of the preceding claims **characterised in that** the injection block (6) is formed of a movable metal support plate (27) attached so as to be elastically recalled toward the top through the use of elastic forces (28).

7. A preparation unit (1) according to the preceding claim **characterised in that** the movable metal plate (27) on the injection block (6) comprises two spray heads (30) connected to the hydraulic circuit integrated within the rest of the machine (3).

8. A preparation unit (1) according to the preceding claim **characterised in that** each spray head (30) takes the form of a water diffusion head with a flat perforated front surface and a rear inlet connected to the pressurized hot water supply circuit of the machine through various control and safety devices.

9. A preparation unit (1) according to either claim 7 or claim 8 **characterised in that** the spray heads (30) are each attached so as to move like a piston within a protective sleeve (31) projecting from the lower surface of the movable metal support plate (27).

10. A preparation unit (1) according to the preceding claim **characterised in that** the lower portion of the protective sleeves (31) on the injection block (6) comprises a sealing element (33).

11. A preparation unit (1) according to either claim 9 or claim 10 **characterised in that** the lower edge of the protective sleeve (31) of each spray head (30) has a concave bevelled portion (35) rounded in shape with a curve essentially corresponding to the curved edge of the pods (24).

12. A preparation unit (1) according to any one of claims 7 through 11 **characterised in that** each spray head (30) is associated with a presence detector (37) for pods (24) based on the front portion of spray head (30) being blocked by contact with the upper surface of the pod (24).

13. A preparation unit (1) according to the preceding claim **characterised in that** the pod presence detector (37) comprises a micro-switch or contact whose contacts are actuated to open or close by the internal extremity of the body of spray head (30) being blocked by contact between the front surface of the spray head (30) and the upper surface of the pod (24).

14. A preparation unit (1) according to any one of the preceding claims **characterised in that** the drawer (5) is a unit that moves in horizontal translation, for example, on rollers (10) between an extended position and a retracted position.

15. A preparation unit (1) according to the preceding claim **characterised in that** the movable drawer (5) is motorized by means of an auxiliary motor (11) and a pinion drive (12) engaging with a rack (13) affixed to one of the supports on the drawer (5).

16. A preparation unit (1) according to any one of the preceding claims **characterised in that** the drawer (5) is formed of a supporting frame (15) holding a tilting receiving platform (16).

17. A preparation unit (1) according to the preceding claim **characterised in that** the tilting receiving platform (16) is attached so that it pivots on a front transverse axle and is maintained in the rear by a mechanism locking it in the working position.

18. A preparation unit (1) according to the preceding claim **characterised in that** the locking mechanism comprises two locking catches (25).

19. A preparation unit (1) according to any one of claims 17 through claim 18 **characterised in that** the receiving platform (16) is maintained during the entire coffee preparation operation by the locking mechanism and **in that** it tilts after being freed from the locking mechanism at the end of the operation between a horizontal operating position and an downwardly angled ejection position which it assumes through gravity.

20. A preparation unit (1) according to any one of claims 16 through 19 **characterised in that** the receiving platform (16) has a groove which engages with a filter-holder (18) comprising two receptor cavities (19) each serving as a housing for a perforated cupel or strainer (20) and each having a evacuation channel (21) in its upper surface, and in tat a pod or pods (24) containing the serving of coffee to be extracted are placed in either one or both of the two strainers (20).

21. A preparation unit (1) according to the preceding claim **characterised in that** each evacuation channel communicates through a passageway, each extending through a flexible evacuation conduit (21), with a flow piece (22) serving as a dispensing spout.

22. A preparation unit (1) according to any one of claims 16 through 21 **characterised in that** the frame (15) forming the mechanical support for the drawer (5) comprises stops.

23. A preparation unit (1) according to the preceding claim **characterised in that** the stops comprise buffers made of flexible material.

24. A preparation unit (1) according to any one of the preceding claims **characterised in that** the descent of the injection block (6) takes place in such a way that the lower edge of the protective sleeve (31) of each spray head (30) comes into close contact with the upper edge of the filter-holder plate (18) on the drawer (5) to form a sealed extraction chamber shaped generally like the pod (24).

25. A preparation unit (1) according to any one of the preceding claims **characterised in that** a hopper (26) guides the used pods (24) as they fall into a waste receptacle located at the bottom of the machine or beneath the machine (3).

26. A preparation unit (1) according to any one of the preceding claims **characterised in that** it further comprises one or more optical, magnetic, electronic, mechanical or other type of devices for reading identification codes supplied on the pods (24).

## Patentansprüche

1. Einheit zur automatischen Zubereitung (1) von einer oder zwei Dosen - getrennt oder gleichzeitig
- eines warmen Getränks, insbesondere Espresso-Kaffee, aus warmem Wasser unter Druck, und einer oder zweier dosierter Menge(n) eines trockenen Produkts, jeweils in einer Aufmachung, die Portionspackung (24) genannt wird, Gruppe in Form eines mechanischen Trägers (4), der in eine Maschine zur Zubereitung eines warmen Getränks (3), insbesondere von Kaffee, montiert wird, bestehend aus einem einzigen Schieber (5), der zwischen einer Auszugsposition, einer Beladungsposition und einer Entleerungsposition von einer oder von zwei Portionspackung(en) (24) beweglich ist, wobei der bewegliche Schieber (5) eine Auszugs-Aufnahmeplatte (16) trägt und wobei die Gruppe außerdem aus einem Eingussblock (6) besteht, der den Träger (4) in seinem Vorderteil oberhalb des beweglichen Schiebers (5) in seiner Auszugsposition aufhält und insgesamt hin zu und weg von dem beweglichen Schieber (5) verschiebbar ist, **gekennzeichnet dadurch, dass**:
- die Aufnahmeplatte (16) zwei getrennte einzelne Standorte aufweist, jeder vorgesehen für jeweilig eine Portionspackung (24),
- die Aufnahmeplatte (16) auf dem beweglichen Schieber (5) um eine Vorder-Querachse zwischen einer waagrechten Auszugs- oder Beladungs-Position und einer schrägen Entleerungsposition einer oder beider Portionspackung(en) (24) kippbar montiert ist,
- eine Nockenwelle (7) mit Winkellagebestimmungsvorrichtung, deren Nocken (29) derart sind, dass man alle Bewegungen des Eingussblocks (6) erkennt, entsprechend einem Zyklus durch eine einzige Drehung der Nockenwelle (7), die von einem einzigen Motor (8) stammt, der sich immer in derselben Richtung dreht, durch ein Untersetzungsgetriebe mit Ritzeln (9), das den Eingussblock (6) in Bewegungen zu dem Schieber (5) hin versetzt, der Rücklauf weg vom Schieber (5) erfolgt automatisch durch eine Rückstellkraft (28),
- die Nockenwelle (7) mit Nocken (29), die von dem einzigen Motor (8) mitgenommen wird, alle gesteuerten Organe in Bewegung oder in Betrieb setzt,
- einen Präsenzmelder (37) für jede einzelne Portionspackung (24) die in der Aufnahmeplatte vorhanden ist (16).

2. Zubereitungseinheit nach Anspruch 1, **gekennzeichnet dadurch, dass** die Bewegungen des Eingussblocks, die durch die Nocken bewirkt werden, jedesmal durch eine Rollbewegung des Teils des Nockens sind, der sich auf einen formstabilen Schlitten stützt.

3. Zubereitungseinheit nach Anspruch 1, **gekennzeichnet dadurch, dass** die Profile der Nocken (29) überstehende Teile aufweisen, die für ihre Abstiegsbewegungen in Druckauflage auf den beweglichen Eingussblock (6) auf Höhe der Auflageschlitten (39) kommen .

4. Zubereitungseinheit nach einem beliebigen der vorherigen Ansprüche, **gekennzeichnet dadurch, dass** die Nockenwelle (7) an einem ihrer Enden eine Winkellagebestimmungsvorrichtung (38) umfasst.

5. Zubereitungseinheit nach dem vorherigen Anspruch, **gekennzeichnet dadurch, dass** die Winkellagebestimmungsvorrichtung (38) ein OT/UT-Detektor der Nockenwelle ist.

6. Zubereitungseinheit nach einem beliebigen der vorherigen Ansprüche, **gekennzeichnet dadurch, dass** der Eingussblock (6) aus einer beweglichen Trägermetallplatte (27) besteht, die in elastischer Rückstellung nach oben mittels elastischer Kräfte (28) montiert ist.

7. Zubereitungseinheit nach dem vorherigen Anspruch, **gekennzeichnet dadurch, dass** die bewegliche Metallplatte (27) des Eingussblocks (6) zwei Brausen (30) umfasst, die mit dem Hydraulikkreis verbunden sind, der mit dem Rest der Maschine (3) integriert ist.

8. Zubereitungseinheit nach dem vorherigen Anspruch, **gekennzeichnet dadurch, dass** jede Handbrause (30) die Form eines Wassersprengkopfs hat, mit durchlöcherter ebener Vorderseite und wobei der hintere Eintritt durch verschiedene Steuer- und Sicherheitsvorrichtungen mit dem Druck-Warmwasserzufuhrkreislauf der Maschine verbunden ist.

9. Zubereitungseinheit nach einem beliebigen der Patentansprüche 7 oder 2, **gekennzeichnet dadurch, dass** die Brausen (30) beweglich nach Art eines Kolbens in einer Schutzhülle (31) montiert sind und aus der Unterseite der beweglichen Trägermetallplatte (27) vorstehen.

10. Zubereitungseinheit nach dem vorherigen Anspruch, **gekennzeichnet dadurch, dass** das Unterteil der Schutzhüllen (31) des Eingussblocks (6) ein Dichtigkeitselement (33) umfasst.

11. Zubereitungseinheit nach einem beliebigen der Patentansprüche 9 oder 10, **gekennzeichnet dadurch, dass** der Unterrand der Schutzhülle (31) jeder Brause (30) ein konkav abgeschrägtes Teil (35) mit abgerundetem Profil aufweist, dessen Biegung ungefähr der der Ränder der Portionspackungen (24) entspricht.

12. Zubereitungseinheit nach einem beliebigen der Patentansprüche 7 bis 11, **gekennzeichnet dadurch, dass** mit jeder Brause (30) ein Präsenzmelder (37) für eine Portionspackung (24) verbunden ist, basierend auf dem Anschlagkontakt der Vorderseite der Brause (30) auf der Oberseite der Portionspackung (24).

13. Zubereitungseinheit nach dem vorherigen Anspruch, **gekennzeichnet dadurch, dass** der Präsenzmelder der Portionspackung (37) einen Mikroschalter oder ein Schütz umfasst, dessen Kontakte durch das innere Endes des Körpers der sich schließenden oder öffnenden Brause (30) betätigt werden, beim Anschlagkontakt der Vorderseite der Brause (30) mit der Oberseite der Portionspackung (24).

14. Zubereitungseinheit nach einem beliebigen der vorherigen Ansprüche, **gekennzeichnet dadurch, dass** der Schieber (5) beweglich in horizontaler Verschiebung montiert ist, zum Beispiel auf Laufrollen (10), zwischen einer ausgefahrenen Position und einer eingerückten Position.

15. Zubereitungseinheit nach dem vorherigen Anspruch, **gekennzeichnet dadurch, dass** der bewegliche Schieber (5) mittels eines Hilfsmotors (11) und eines Ritzelantriebs (12) motorisiert ist, der in einer Zahnstange (13) eingreift, die auf einer der Kanten des Schiebers (5) befestigt ist.

16. Zubereitungseinheit nach einem beliebigen der vorherigen Ansprüche, **gekennzeichnet dadurch dass** der Schieber (5) als Trägerrahmen (15) ausgebildet ist, der eine kippbare Aufnahmeplatte (16) trägt.

17. Zubereitungseinheit nach dem vorherigen Anspruch, **gekennzeichnet dadurch, dass** die kippbare Aufnahmeplatte (16) um eine Quervorderachse rotierend montiert ist und von einem verriegelungsmechanismus in Arbeitsposition hinten gehalten wird.

18. Zubereitungseinheit nach dem vorherigen Anspruch, **gekennzeichnet dadurch, dass** der Verriegelungsmechanismus zwei verriegelungshaken (25) umfasst.

19. Zubereitungseinheit nach einem beliebigen der Patentansprüche 17 oder 10, **gekennzeichnet dadurch dass** die Aufnahmeplatte (16) während der gesamten Zubereitung des Kaffees durch den Verriegelungsmechanismus gehalten wird und nach Lösung des Verriegelungsmechanismus am Betriebsende zwischen einer horizontalen Betriebsposition und eine geneigten Ausstoßposition nach unten kippt, in der sie infolge der Schwerkraft ankommt.

20. Zubereitungseinheit nach einem beliebigen der Patentansprüche 16 bis 19, **gekennzeichnet dadurch, dass** die Aufnahmeplatte (16) eine Aushöhlung aufweist, in der ein Filterhalter (18) mit zwei Aufnahmehohlräumen (19) untergebracht ist, die jeweils als Aufnahme für eine durchlöcherte Schale oder Sieb (20) dienen und jeweils einen Entleerungskanal (21) an der Oberseite aufweisen, sowie **dadurch** dass in einem oder beiden Sieben (20) jedesmal eine Portionspackung (24) plaziert wird oder werden, die die herauszuziehende Kaffeedosis enthält.

21. Zubereitungseinheit nach dem vorherigen Anspruch, **gekennzeichnet dadurch, dass** jeder Entleerungskanal durch einen Durchgang, der jeweils durch einen Entleerungsschlauch (21) verlängert ist, mit einem Abflussstück (22) in Verbindung steht, das als Ausgabeschnabel dient.

22. Zubereitungseinheit nach einem beliebigen der Patentansprüche 16 bis 21, **gekennzeichnet dadurch, dass** der Rahmen (15) der den mechanischen Träger des Schiebers (5) bildet, Anschläge umfasst.

23. Zubereitungseinheit nach dem vorherigen Anspruch, **gekennzeichnet dadurch, dass** die Anschläge Stopfen aus biegsamem Material enthalten.

24. Zubereitungseinheit nach einem beliebigen der vorherigen Ansprüche, **gekennzeichnet dadurch, dass** der Abstieg des Eingussblocks (6) vorgesehen ist, damit der Unterrand der Schutzhülle (31) jeder Brause (30) in dichten Kontakt mit der Oberkante der Filterhalterplatte (18) des Schiebers (5) kommt, zur Bildung einer dichten Auszugskammer, die ungefähr die Form einer Portionspackung (24) hat.

25. Zubereitungseinheit nach einem beliebigen der vorherigen Ansprüche, **gekennzeichnet dadurch, dass** ein Auslauftrichter (26) die leeren Portionspackungen (24) in ihrem Fall zu einem Müllsammelpunkt im unteren Teil der Maschine oder unter dieser (3) führt.

26. Zubereitungseinheit nach einem beliebigen der vorherigen Ansprüche, **gekennzeichnet dadurch, dass** sie außerdem eine oder mehrere Vorrichtung(en) zur optischen, magnetischen, elektronischen, mechanischen oder ähnlichen Ablesung von Identifizierungscodes auf den Portionspackungen (24) umfasst.
